(19)

Europäisches
Patentamt
European
Patent Office
Office européen
des brevets

(11) **EP 1 857 564 A2**

(12) **EUROPEAN PATENT APPLICATION**

(43) Date of publication:
**21.11.2007  Bulletin 2007/47**

(21) Application number: **07009820.7**

(22) Date of filing: **16.05.2007**

(51) Int Cl.:
*C22C 38/02* (2006.01)   *C22C 38/04* (2006.01)
*C22C 38/18* (2006.01)   *C22C 38/42* (2006.01)
*C21D 8/02* (2006.01)   *C21D 9/46* (2006.01)

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **17.05.2006  JP  2006137229**
**23.02.2007  JP  2007043384**

(71) Applicant: **Nissan Motor Company Limited**
**Kanagawa-ku**
**Yokohama-shi, Kanagawa 221-0023 (JP)**

(72) Inventors:
• **Ono, Masamoto**
**Atsugi-shi,**
**Kanagawa 243-0192 (JP)**
• **Sasaoka, Hideyuki**
**Atsugi-shi,**
**Kanagawa 243-0192 (JP)**

• **Nakanishi, Elizaburou**
**Atsugi-shi,**
**Kanagawa 243-0192 (JP)**
• **Okada, Yoshio**
**Atsugi-shi,**
**Kanagawa 243-0192 (JP)**
• **Michura, Yoshiharu**
**Atsugi-shi,**
**Kanagawa 243-0192 (JP)**
• **Takagi, Masaaki**
**Atsugi-shi,**
**Kanagawa 243-0192 (JP)**

(74) Representative: **Weber, Joachim**
**Hoefer & Partner**
**Patentanwälte**
**Pilgersheimer Strasse 20**
**81543 München (DE)**

(54) **High-Tensile steel sheet, steel sheet joining process and high-strength automotive part**

(57)    There is provided a high-tensile steel sheet containing 0.15 to 0.25 mass% of C, 0.1 to 2.0 mass% of Si, 0.10 to 1.0 mass% of Mn, 0.5 to 3.5 mass% of Cr, 0.02 mass% or less of P, 0.01 mass% or less of S and the balance being Fe and unavoidable impurities based on the total mass of the steel sheet and satisfying a content ratio of Mn/(Mn+Cr) < 0.50.

# FIG.1

**EP 1 857 564 A2**

**Description**

BACKGROUND OF THE INVENTION

The present invention relates to a high-tensile steel sheet, a joining process for the high-tensile steel sheet and a high-strength automotive part using the high-tensile steel sheet.

Automotive steel sheets have undergone tensile strength improvements for vehicle weight reduction. There is however a detrimental problem that, when such high-tensile steel sheets are joined by resistance welding, the resistance welded joint portions of the steel sheets deteriorate in toughness during rapid heating and quenching steps of the resistance welding process so that the steel sheets may not be able to show sufficient and stable joint strength.

In order to solve the above detrimental problem, Japanese Laid-Open Patent Publication No. 03-180445 proposes a high-tensile automotive steel sheet formed with a limited content of additive elements, notably carbon.

SUMMARY OF THE INVENTION

The steel sheets increase in resistance weldabllity but decrease in tensile strength with decrease in carbon content. The tensile strength of the steel sheets has thus remained at around 980 MPa under present circumstances due to the difficulty of increasing the tensile strength of the steel sheets to a higher level without a loss of resistance weldability.

It is therefore an object of the present invention to provide a high-tensile steel sheet having a tensile strength of 1180 MPa or higher while securing excellent resistance weldablity for sufficient and stable joint strength.

It is also an object of the present invention to provide a joining process for the high-tensile steel sheet and a high-strength automotive part using the high-tensile steel sheet.

As a result of extensive research and development, it has been found by the present inventors that a steel sheet, when formed with a limited manganese content and a carbon content of up to 0.25 mass%, shows almost no deterioration in resistance welding strength. There however arises a possibility that the steel sheet may deteriorate in hardenability when the manganese content of the steel sheet is limited to a relatively low degree. As a result of further research and development, it has also been found by the present inventors that the addition of chromium, in place of manganese, into the steel sheet makes a contribution to hardenability without causing a deterioration in resistance welding strength. The present invention has been made based on these findings.

According to a first aspect of the present invention, there is provided a high-tensile steel sheet comprising 0.15 to 0.25 mass% of C, 0.1 to 2.0 mass% of Si, 0.10 to 1.0 mass% of Mn, 0.5 to 3.5 mass% of Cr and the balance being Fe and unavoidable impurities based on the total mass of the steel sheet and satisfying a content ratio of Mn/(Mn+Cr) < 0.50.

According to a second aspect of the present invention, there is provided a high-tensile steel sheet comprising 0.15 to 0.25 mass% of C, 0.1 to 2.0 mass% of Si, 0.10 to 1.0 mass% of Mn, 0.5 to 3.5 mass% of Cr, 0.02 mass% or less of P, 0.01 mass% or less of S and the balance being Fe and unavoidable impurities based on the total mass of the steel sheet and satisfying a content ratio of Mn/(Mn+Cr) < 0.50.

According to a third aspect of the present invention, there is provided a joining process for the above high-tensile steel sheet, comprising subjecting a joint portion of the high-tensile steel sheet to resistance welding.

According to a fourth aspect of the present invention, there is provided an automotive part produced from the above high-tensile steel sheet.

The other objects and features of the present invention will also become understood from the following description.

BRIEF DESCRIPTION OF THE DRAWINGS

FIG. 1 is a diagram showing the carbon, manganese and chromium content percentages of high-tensile steel sheets according to the present invention and according to the earlier technology.

FIG. 2 is a diagram showing the relationship of joint strength and material strength of the high-tensile steel sheets according the present invention and according to the earlier technology.

DESCRIPTION OF THE EMBODIMENTS

A high-tensile steel sheet according to the present invention will be described in detail below. In the following description, all percentages are by mass unless otherwise specified.

The high-tensile steel sheet of the present invention comprises 0.15 to 0.25% of C, 0.1 to 2.0% of Si, 0.10 to 1.0% of Mn, 0.5 to 3.5% of Cr and the balance being Fe and unavoidable impurities based on the total mass of the steel sheet and satisfies a content ratio of Mn/(Mn+Cr) < 0.50. Preferably, the high-tensile steel sheet of the present invention may further comprise 0.1 to 3.0% of Ni, 0.01 to 3.0% of Cu and 0.001 to 0.1 % of A1 based on the total mass of the steel sheet.

C (carbon) is particularly effective in increasing the strength of the high-tensile steel sheet. If the C content of the high-tensile steel sheet is less than 0.15%, the high-tensile steel sheet fails to secure desired strength. If the C content of the high-tensile steel sheet exceeds 0.25%, the high-tensile steel sheet deteriorates in toughness during resistance welding. In the present invention, the C content of the high-tensile steel sheet is thus controlled to within the range of 0.15 to 0.25%, preferably 0.18 to 0.22%, more preferably 0.19 to 0.21 %, in order for the high-tensile steel sheet to secure desired strength without deteriorating in toughness due to resistance welding.

Si (silicon) is effective in deoxidation and strength improvement. If the Si content of the high-tensile steel sheet is less than 0.1 %, the high-tensile steel sheet cannot obtain a desired deoxidation and strength improvement effect. If the Si content of the high-tensile steel sheet exceeds 2.0%, the high-tensile steel sheet may deteriorate in toughness. The Si content of the high-tensile steel sheet is thus controlled to within the range of 0.10 to 2.0% in the present invention.

Mn (manganese) is effective in lowering the austenitizing temperature, providing the high-tensile steel sheet with an austenite microstructure and thereby improving the hardenability and temper softening resistance of the high-tensile steel sheet. If the Mn content of the high-tensile steel sheet is less than 0.10%, the high-tensile steel sheet cannot obtain a desired hardenability and temper softening resistance improvement effect. If the Mn content of the high-tensile steel sheet exceeds 1.0%, the high-tensile steel sheet may deteriorate in toughness during resistance welding. The Mn content of the high-tensile steel sheet is thus controlled to within the range of 0.10 to 1.0%, preferably 0.1 to 0.5%, more preferably 0.1 to 0.3%, in the present invention.

Cr (chromium) is effective in hardenability improvement and capable of replacing the other component in cementite so as to retard temper softening of the high-tensile steel sheet. In order to obtain such a hardenability and temper softening resistance improvement effect, it is necessary to add Cr in an amount of at least 0.5%, preferably 1.0% or more. However, the addition of Cr in an amount of more than 3.5% may cause not only a saturation of the hardenability improvement effect but a deterioration in steel sheet toughness. The Cr content of the high-tensile steel sheet is thus controlled to within the range of 0.5 to 3.5% in the present invention.

Ni (nickel) is effective in lowering the austenitizing temperature of the high-tensile steel sheet and providing the high-tensile steel sheet with an austenite microstructure. Ni is also effective in corrosion resistance improvement. If the Ni content of the high-tensile steel sheet is less than 0.1%, the high-tensile steel sheet cannot obtain a desired austenitization and corrosion resistance improvement effect. If the Ni content of the high-tensile steel sheet exceeds 3.0%, the austenitization and corrosion resistance improvement effect tends to become saturated. Further, Ni is a particularly expensive element. In the case of adding Ni into the high-tensile steel sheet, the Ni content of the high-tensile steel sheet is thus preferably controlled to within the range of 0.1 to 3.0% in the present invention.

Cu (copper) is effective in strengthening the austenite structure of the high-tensile steel sheet and preventing the high-tensile steel sheet from hydrogen embrittlement by a fine precipitation of Cu. It is desirable to add 0.01% or more of Cu in the high-tensile steel sheet as necessity. However, the high-tensile steel sheet deteriorates in workability when Cu is added excessively into the high-tensile steel sheet. In the case of adding Cu into the high-tensile steel sheet, the Cu content of the high-tensile steel sheet is thus preferably controlled to within the range of 0.01 to 3.0% in the present invention.

Al (aluminum) is effective in deoxidation. It is desirable to add 0.001% or more of A1 into the high-tensile steel sheet as necessity. However, there arises a possibility of inclusion formation and/or workability deterioration when Al is added excessively into the high-tensile steel sheet. In the case of adding Al into the high-tensile steel sheet, the Al content of the high-tensile steel sheet is thus preferably controlled to within the range of 0.001 to 0.1% in the present invention.

P (phosphorous) and S (sulfur) are generally contained as impurities in the high-tensile steel sheet. Both of these impurity elements P and S can cause a deterioration in grain boundary strength. In the present invention, it is thus desirable to minimize the P and S contents of the high-tensile steel sheet, and more specifically, to control the P content of the high-tensile steel sheet to 0.2% or less and control the S content of the high-tensile steel sheet to 0.1 % or less.

Further, there is a possibility that the high-tensile steel sheet deteriorates in hardenability when the Mn content of the high-tensile steel sheet is limited to 0.10 to 1.0%. In order to prevent such a deterioration in hardenability, the Cr content becomes increased according to the decrease in the Mn content so that Cr contributes to steel hardenability in place of Mn in the present invention. More specifically, the Mn content of the high-tensile steel sheet is made lower than the Cr content of the high-tensile steel sheet to satisfy a content ratio of Mn / (Mn + Cr) < 0.5 in the present invention. If the Mn content is greater than or equal to the Cr content so that the content ratio Mn / (Mn + Cr) becomes higher than or equal to 0.5, the high-tensile steel sheet undesirably deteriorates in toughness during resistance welding.

With the above composition, the high-tensile steel sheet secures sufficient hardenability even when the C content of the high-tensile steel sheet increases up to 0.25%, and thus shows a tensile strength of 1180 MPa or higher by hot rolling.

The high-tensile steel sheet may have a surface treated with zinc plating so as to attain excellent rust resistance. There is no particular restriction on the zinc plating technique. The zinc plating can be performed by any know technique such as electroplating, hot dipping or thermal spraying.

The high-tensile steel sheet also secures excellent resistance weldability and thus can be applied to various mechanical parts by resistance welding e.g. resistance spot welding or resistance seam welding. For example, the high-tensile steel sheet is suitable for automotive parts, notably vehicle body parts, for vehicle weight reduction and strength improvement.

In the case where the high-tensile steel sheet is joined to any metal member by resistance welding to form a resistance welded joint between the high-tensile steel sheet and the metal member, the resistance welded joint may preferably be cooled, heated again to a temperature range from an AC3 transformation temperature (at which the steel completes change from ferrite or pearlite to austenite under heating or begins change from austenite to ferrite or pearlite upon cooling) to a temperature 100°C higher than the AC3 transformation temperature, and then, recooled so as to provide the resistance welded joint portion of the high-tensile steel sheet with a finer prior austenite grain size for stable welding joint strength. The resistance welded joint may preferably be further tempered at a temperature range from 150°C to an AC1 transformation temperature (at which austenite begins to form on heating), after the above recooling step, so as to provide the resistance welded joint portion of the high-tensile steel sheet with excellent toughness and ductility for more stable joint strength. Needles to say, the metal member may be or may not be a high-tensile steel sheet according to the present invention.

The present invention will be described in more detail by reference to the following examples. However, it should be noted that the following examples are only illustrative and not intended to limit the invention thereto.

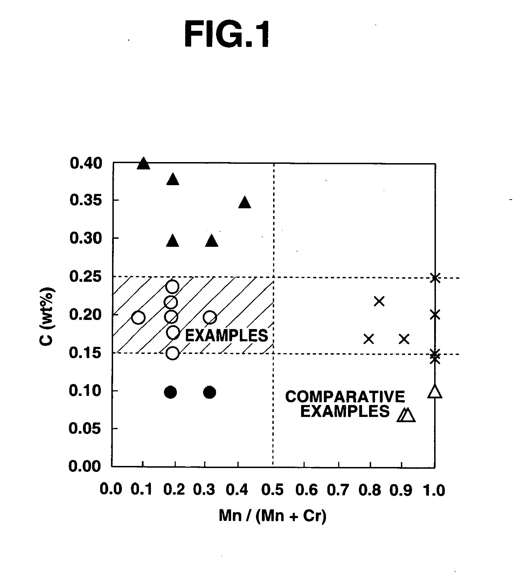

In Examples 1-8 and Comparative Examples 1-18, steel sheets were formed with a thickness of 2.0 mm by heating steel materials at 1200°C, subjecting the steel materials to hot rolling of which the finishing temperature was 900 to 1000°C, cooling the steel materials at about 30°C/sec and keeping the steel sheets at 400 to 600°C. The chemical compositions of the steel sheets are indicated in TABLE 1 and FIG. 1. In FIG. 1, the open circles represent the steel compositions of Examples 1-8 (intermediate carbon, low manganese, high-Cr steels according to the present invention); the filled circles represent the steel compositions of Comparative Examples 1-2 (low carbon, low manganese, high chromium steels); the filled triangles represent the steel compositions of Comparative Examples 3-7 (high carbon, low manganese, high chromium steels); the open triangles represents the steel compositions of Comparative Examples 8-11 (ordinary low carbon steels); and the crosses represent the steel compositions of Comparative Examples 12-18 (ordinary intermediate carbon steels). Further, the C-Mn-Cr content range ($0.15\% \leq C \leq 0.25\%$, Mn/(Mn+Cr) < 0.5) according to the present invention is indicated by hatching in FIG. 1.

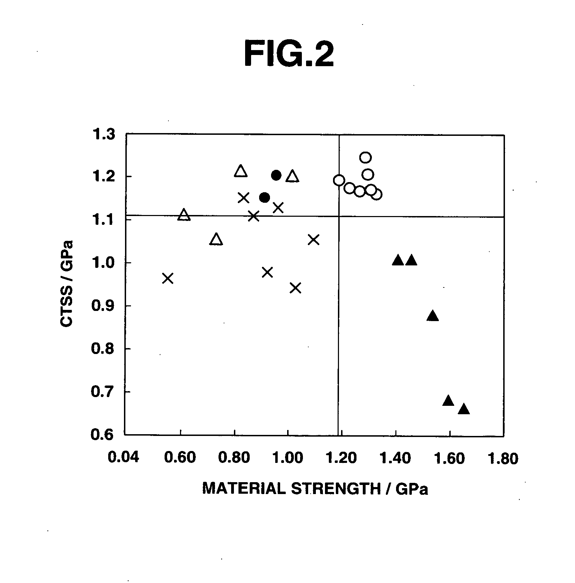

For mechanical property evaluation, tensile tests were conducted on the steel sheets using No.5 test pieces according to JIS Z 2201 to determine the tensile strength TS and stress drop degree SD of each steel sheet. The mechanical strength properties of the steel sheets are indicated in TABLE 2 and FIG. 2. In FIG. 2, the open circles represent the mechanical steel properties of Examples 1-8 (intermediate carbon, low manganese, high-Cr steels according to the present invention); the filled circles represent the mechanical steel properties of Comparative Examples 1-2 (low carbon, low manganese, high chromium steels); the filled triangles represent the mechanical steel properties of Comparative Examples 3-7 (high carbon, low manganese, high chromium steels); the open triangles represents the mechanical steel properties of Comparative Examples 8-11 (ordinary low carbon steels); and the crosses represent the mechanical steel properties of Comparative Examples 12-18 (ordinary intermediate carbon steels) as is the case with FIG. 1.

These steel sheets were cut into test specimens. Joint surfaces of the test specimens were degreased and subjected to spot welding with a welding current of 10 to 14 kA for 19 to 23 cycles under a pressure of 4950 to 6450 kN.

Tensile shear test and cross tension test were conducted on the spot welded test specimens according to JIS Z 3136 and JIS Z 3137 to determine a tensile shear strength TSS and a cross tension strength CTS of each test specimen.

Section test was also conducted on the spot welded test specimens according to JIS Z 3139. In the section test, the cross sections of the test specimens before and after the spot welding were subjected to grinding and etching with a natal solution and observed by an optical microscope with a magnification of 100 to 1000 times and by a scanning electron microscope (SEM) with a magnification of 1000 to 5000 times, thereby determining the nugget diameter ND of each test specimen to see the influence of welding heat on the steel structure.

There is a tendency that the resistance welded joint portion of the steel sheet shows an increase in tensile shear strength TSS but does not show an increase in cross tension strength CTS when the steel material strength exceeds 590 MPa. For this reason, it is desirable to evaluate the joint strength (resistance welding strength) of the steel sheets by comparison of the test results of the cross tension strength CTS. The tensile shear strength TSS and the cross tension strength CTS were measured in loads in the tensile shear test and cross tension test and thus converted to a tensile shear stress TSS' and a cross tension stress CTS' by dividing these strength measurement values by a nugget area $\pi \cdot (ND/2)^2$, respectively, in order to evaluate the joint strength of each test specimen in terms of the sum of CTS components of the tensile shear stress TSS' and the cross tension stress CTS' (referred to as "stress intensity factor"). Namely, the tensile shear stress TSS', the cross tension stress CTS' and the stress intensity factor CTSS were determined according to the following equations. The evaluation results are also indicated in TABLE 2.

$$TSS' = TSS / \{\pi \cdot (ND/2)^2\}$$

$$CTS' = CTS / \{\pi \cdot (ND/2)^2\}$$

$$CTSS = CTS' + TSS'^{(\sin\theta)}$$

$$\theta = 30°$$

It is known that the steel structure becomes affected by high welding heat during the resistance welding process so that the steel material gets softened to cause a deterioration in joint strength.

To examine the occurrence of such steel softening, the hardness of the spot welded test specimens was measured according to JIS Z 2244 by cutting the test specimen at around its welded portion in the thickness direction, embedding the cut piece of the test specimen in a resin and subjecting the test piece to mirror grinding. The examination results are indicated in TABLE 2. In TABLE 2, the symbols "○" indicate the occurrence of steel softening; and the symbols " ×" indicate the nonoccurrence of steel softening.

Further, it can be said that the rupture pattern of the resistance welded joint portion of the steel sheet is one of factors having the greatest influence on the joint strength stability. The resistance welding strength of the steel sheet is in general stable in the case where the resistance welded joint portion of the steel sheet undergoes plug rupture according to JIS Z 3136.

Rupture test was thus conducted on the spot welded test specimens according to JIS Z 3136 to test the rupture pattern of each test specimen. The test results are indicated in TABLE 2. In TABLE 2, the symbols "○" indicate the occurrence of plug rupture; and the symbols " ×" indicate the occurrence of interface rupture.

TABLE 1

| Sample No. | | Chemical composition (mass%) | | | | | | | | | Sheet thickness (mm) |
|---|---|---|---|---|---|---|---|---|---|---|---|
| | | C | Si | Mn | P | S | Cu | Ni | Cr | Al | |
| Examples | 1 | 0.24 | 0.23 | 0.44 | 0.017 | 0.004 | 0.05 | 1.00 | 1.94 | 0.005 | 2.0 |
| | 2 | 0.22 | 0.24 | 0.44 | 0.017 | 0.004 | 0.05 | 1.00 | 2.00 | 0.005 | 2.0 |
| | 3 | 0.20 | 0.25 | 0.45 | 0.015 | 0.003 | 0.05 | 1.00 | 2.00 | 0.005 | 2.0 |
| | 4 | 0.20 | 0.25 | 0.45 | 0.015 | 0.003 | 0.05 | 1.00 | 1.00 | 0.005 | 2.0 |
| | 5 | 0.18 | 0.25 | 0.47 | 0.020 | 0.003 | 0.05 | 1.00 | 2.00 | 0.005 | 2.0 |
| | 6 | 0.15 | 0.25 | 0.47 | 0.020 | 0.003 | 0.05 | 1.00 | 2.00 | 0.005 | 2.0 |
| | 7 | 0.15 | 0.25 | 0.47 | 0.020 | 0.003 | 0.05 | 1.00 | 1.00 | 0.005 | 2.0 |
| | 8 | 0.20 | 1.52 | 0.35 | 0.008 | 0.002 | 0.1 | 0.05 | 3.20 | 0.005 | 2.0 |
| | 1 | 0.10 | 0.25 | 0.45 | 0.015 | 0.003 | 0.05 | 1.00 | 2.00 | 0.005 | 2.0 |
| | 2 | 0.10 | 0.25 | 0.45 | 0.015 | 0.003 | 0.05 | 1.00 | 1.00 | 0.005 | 2.0 |
| | 3 | 0.40 | 0.10 | 0.20 | 0.015 | 0.003 | 0.05 | 1.00 | 2.00 | 0.005 | 2.0 |
| | 4 | 0.38 | 0.25 | 0.45 | 0.015 | 0.003 | 0.05 | 1.00 | 2.00 | 0.005 | 2.0 |
| | 5 | 0.35 | 0.20 | 0.70 | 0.019 | 0.013 | 0.05 | 0.25 | 1.00 | 0.005 | 2.0 |
| | 6 | 0.30 | 0.25 | 0.45 | 0.015 | 0.003 | 0.05 | 1.00 | 2.00 | 0.005 | 2.0 |
| | 7 | 0.30 | 0.25 | 0.45 | 0.015 | 0.003 | 0.05 | 1.00 | 1.00 | 0.005 | 2.0 |
| | 8 | 0.07 | 0.47 | 2.07 | 0.007 | 0.001 | - | - | 0.21 | 0.038 | 2.0 |

(continued)

| Sample No. | | Chemical composition (mass%) | | | | | | | | | Sheet thickness (mm) |
|---|---|---|---|---|---|---|---|---|---|---|---|
| | | C | Si | Mn | P | S | Cu | Ni | Cr | Al | |
| Comparative Examples | 9 | 0.07 | 0.54 | 2.22 | 0.007 | 0.001 | - | - | 0.22 | 0.038 | 2.0 |
| | 10 | 0.07 | 0.55 | 2.42 | 0.008 | 0.002 | - | - | 0.20 | 0.038 | 2.0 |
| | 11 | 0.10 | 0.60 | 2.00 | 0.003 | 0.006 | - | - | - | 0.030 | 2.0 |
| | 12 | 0.15 | 0.62 | 2.00 | 0.003 | 0.004 | - | - | - | 0.030 | 2.0 |
| | 13 | 0.14 | 0.61 | 2.00 | 0.004 | 0.006 | - | - | - | 0.030 | 2.0 |
| | 14 | 0.17 | 1.74 | 1.55 | 0.011 | 0.018 | - | - | 0.39 | 0.030 | 2.0 |
| | 15 | 0.17 | 1.35 | 1.97 | 0.008 | 0.001 | - | - | 0.20 | 0.030 | 2.0 |
| | 16 | 0.20 | 0.59 | 2.01 | 0.004 | 0.006 | - | - | - | 0.029 | 2.0 |
| | 17 | 0.25 | 0.58 | 2.01 | 0.003 | 0.006 | - | - | - | 0.030 | 2.0 |
| | 18 | 0.22 | 0.22 | 1.23 | 0.020 | 0.002 | - | - | 0.25 | 0.030 | 2.0 |

TABLE 2

| Sample No. | | Tensile strength (GPa) | | Joint stress | | | Softening | Rupture |
|---|---|---|---|---|---|---|---|---|
| | | TS | SD | TSS' | CTS' | CTSS | | |
| Examples | 1 | 1.32 | 2.2 | 0.9 | 0.2 | 1.2 | ○ | ○ |
| | 2 | 1.30 | 2.9 | 0.9 | 0.2 | 1.2 | ○ | ○ |
| | 3 | 1.28 | 3.7 | 0.9 | 0.3 | 1.2 | ○ | ○ |
| | 4 | 1.26 | 2.5 | 0.7 | 0.3 | 1.2 | ○ | ○ |
| | 5 | 1.22 | 3.9 | 0.7 | 0.3 | 1.2 | ○ | ○ |
| | 6 | 1.18 | 4.2 | 0.8 | 0.3 | 1.2 | ○ | ○ |
| | 7 | 1.18 | 3.8 | 0.8 | 0.3 | 1.2 | ○ | ○ |
| | 8 | 1.29 | 2.5 | 0.8 | 0.3 | 1.2 | ○ | ○ |
| Comparative Examples | 1 | 0.95 | 2.8 | 0.8 | 0.3 | 1.2 | ○ | ○ |
| | 2 | 0.91 | 2.4 | 0.7 | 0.3 | 1.2 | ○ | ○ |
| | 3 | 1.65 | 3.8 | 0.3 | 0.1 | 0.7 | ○ | × |
| | 4 | 1.59 | 3.5 | 0.4 | 0.1 | 0.7 | ○ | × |
| | 5 | 1.53 | 2.9 | 0.6 | 0.1 | 0.9 | ○ | × |
| | 6 | 1.45 | 3.4 | 0.8 | 0.1 | 1.0 | ○ | × |
| | 7 | 1.40 | 3.1 | 0.7 | 0.2 | 1.0 | ○ | × |
| | 8 | 0.61 | 1.7 | 0.6 | 0.3 | 1.1 | ○ | ○ |
| | 9 | 0.82 | 1.6 | 0.7 | 0.4 | 1.2 | × | ○ |
| | 10 | 1.01 | 1.7 | 0.8 | 0.3 | 1.2 | × | ○ |
| | 11 | 0.73 | 0.8 | 0.6 | 0.3 | 1.1 | × | ○ |
| | 12 | 0.83 | 0.6 | 0.7 | 0.3 | 1.2 | × | × |
| | 13 | 0.96 | 0.7 | 0.8 | 0.2 | 1.1 | × | × |

(continued)

| Sample No. | | Tensile strength (GPa) | | Joint stress | | | Softening | Rupture |
|---|---|---|---|---|---|---|---|---|
| | | TS | SD | TSS' | CTS' | CTSS | | |
| | 14 | 0.87 | 0.3 | 0.7 | 0.3 | 1.1 | × | × |
| | 15 | 1.09 | 0.4 | 0.8 | 0.2 | 1.1 | × | × |
| | 16 | 0.92 | 0.5 | 0.7 | 0.1 | 1.0 | × | × |
| | 17 | 1.03 | 0.3 | 0.7 | 0.1 | 0.9 | × | × |
| | 18 | 0.55 | 1.2 | 0.7 | 0.1 | 1.0 | × | × |

As is apparent from TABLES 1 and 2 and FIGS. 1 and 2, the steel sheets of Comparative Examples 1-18 were not within the C-Mn-Cr content range of the present invention and were poor in tensile strength and/or welding performance. By contrast, the steel sheets of Examples 1-8 fell within the C-Mn-Cr content range of the present invention and had a tensile strength TS of 1180 MPa or higher and a stress drop degree SD of 2.2 GPa. The spot welded portions of these steel sheets had good weldability performance in all aspects (welding joint strength, no steel softening and plug rupture). It has been thus shown that the steel sheets of Examples 1-8 according to the present invention combined high strength, toughness and ductility with excellent resistance weldability.

The spot welded test specimen of the steel sheet of Example 1 was further subjected to heat treatment, for tempering, by reheating the test specimen to 800°C by high-frequency heating and, immediately after the reheating (e.g. after a lapse of 10 seconds), cooling the test specimen. Subsequently, the steel structure of the test specimen was observed to determine the prior austenite grain size of the test specimen according to JIS G 0551. The spot welded test specimen was also tested again for its weldabilty performance in the same manner as above.

The test specimen of the steel sheet of sample 1 had a martensite structure with an average prior austenite grain size of 3 $\mu$m after the post-welding heat treatment. The weldability performance of the test specimen after the post-welding heat treatment was equal to or better than before the post-welding heat treatment. It is thus estimated that the spot welded portion of the steel sheet of Example 1 showed high toughness and ductility after the post-welding heat treatment.

As described above, it is possible in the present invention to provide the high-tensile steel sheet with both of high strength and excellent resistance weldability by controlling the C content to within 0.15 to 0.25% and increasing the Cr content according to the decrease in the Mn content to satisfy the content ratio of Mn/(Mn+Cr) < 0.5.

The entire contents of Japanese Patent Application No. 2006-137229 (filed on May 17, 2006) and No. 2007-043384 (filed on February 23, 2007) are herein incorporated by reference.

Although the present invention has been described with reference to the above-specific embodiments of the invention, the invention is not limited to the these exemplary embodiments. Various modification and variation of the embodiments described above will occur.to those skilled in the art in light of the above teaching. The scope of the invention is defined with reference to the following claims.

**Claims**

1. A high-tensile steel sheet comprising 0.15 to 0.25 mass% of C, 0.1 to 2.0 mass% of Si, 0.10 to 1.0 mass% of Mn, 0.5 to 3.5 mass% of Cr and the balance being Fe and unavoidable impurities based on the total mass of the steel sheet and satisfying a content ratio of Mn/(Mn+Cr) < 0.50.

2. A high-tensile steel sheet comprising 0.15 to 0.25 mass% of C, 0.1 to 2.0 mass% of Si, 0.10 to 1.0 mass% of Mn, 0.5 to 3.5 mass% of Cr, 0.02 mass% or less of P, 0.01 mass% or less of S and the balance being Fe and unavoidable impurities based on the total mass of the steel sheet and satisfying a content ratio of Mn/(Mn+Cr) < 0.50.

3. A high-tensile steel sheet according to claim 1 or 2, further comprising at least one of 0.1 to 3.0 mass% of Ni, 0.01 to 3.0 mass% of Cu and 0.001 to 0.1 mass% of A1 based on the total mass of the steel sheet.

4. A high-tensile steel sheet according to any one of claims 1 to 3, having a surface treated with zinc plating.

5. A joining process for a high-tensile steel sheet according to any one of claims 1 to 4, comprising subjecting a joint portion of the high-tensile steel sheet to resistance welding.

6.  A joining process according to claim 5, further comprising: cooling the resistance welded joint portion; heating the resistance welded joint portion to a temperature range from an AC3 transformation temperature to a temperature 100˚C higher than the AC3 transformation temperature; and then, recooling the resistance welded joint portion.

7.  A joining process according to claim 6, further comprising: after said recooling, tempering the resistance welded joint portion at a temperature range from 150˚C to an AC1 transformation temperature.

8.  A high-strength automotive part produced from a high-tensile steel sheet according to any one of claims 1 to 4.

9.  A high-strength automotive part according to claim 8, wherein the high-tensile steel sheet is subjected to resistance welding.

# FIG.1

# FIG.2

**EP 1 857 564 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3180445 A
- JP 2006137229 A
- JP 2007043384 A